# EUROPEAN PATENT SPECIFICATION

(11) **EP 3 110 652 B1**
(45) Date of publication and mention of the grant of the patent: **20.12.2017**
(21) Application number: 14707648.3
(22) Date of filing: 24.02.2014
(51) Int. Cl.: B60L 11/18, B60L 11/14, H02J 7/00, B60W 10/26, H01M 10/04, H01M 10/42, H01M 10/48

(54) **ELECTRICAL STORAGE SYSTEM FOR A VEHICLE AND METHOD FOR CONTROLLING SAID SYSTEM**
ELEKTRISCHES SPEICHERSYSTEM FÜR FAHRZEUG UND VERFAHREN ZU DESSEN STEUERUNG
SYSTÈME DE STOCKAGE ÉLECTRIQUE POUR VÉHICULE ET PROCÉDÉ DE CONTRÔLE

(43) Date of publication of application: 04.01.2017
(73) Proprietor: Volvo Truck Corporation, 405 08 Göteborg (SE)
(72) Inventor: ERIKSSON NORMAND, Lars, SE-417 46 Göteborg (SE)
(74) Representative: Volvo Technology Corporation
(86) International application number: PCT/EP2014/000476
(87) International publication number: WO 2015/124161

(56) References cited:
- WO-A1-2014/012794
- DE-A1-102009 027 835
- DE-A1-102011 082 973
- DE-A1-102011 089 312

## Description

### TECHNICAL FIELD

The invention relates to an electrical storage system, preferably for a vehicle, and a method for controlling said system. The system can comprise multiple electrical storage units, which are preferably connected in parallel. The one or more electrical storage units are connectable to a DC-link by a main contactor, which DC-link is arranged to supply current to or discharge current from the electrical storage system.

The invention can be applied in heavy-duty vehicles, such as trucks, buses, working machines and construction equipment. Although the invention will be described with respect to heavy-duty vehicles, the invention is not restricted to such vehicles, but may also be used in other vehicles such as light vehicles and automobiles.

### BACKGROUND

Energy storage systems for hybrid electric or electric vehicle applications are commonly provided with high voltage electrical storage units having a comparatively flat voltage versus State of Charge (SOC) curve within a central region of its usable SOC window. When propelling a vehicle, electrical power is supplied to or discharged from the system with high power in the region of the curve where the voltage versus SOC is flat. It is therefore desirable to determine the actual SOC of an electrical storage unit. A common way of calculating the SOC is to use Coulomb counting, but a problem with this method is that it suffers from lack of reference and drift of time when repeatedly charging and discharging power to and from the energy storage unit. Eventually the actual SOC status will be lost.

Further, the voltage versus SOC curve has a steep characteristic at high SOC and low SOC, but at these extremes it is not recommended to put in and take out a lot of power since this will affect the lifetime of the electrical storage unit. One way to determine the actual SOC is to charge an electrical storage unit with enough energy to find a certain voltage level which, dependent of the design of the electrical storage unit, corresponds to a predetermined SOC. This process is in this invention referred to as calibration of the electrical storage unit and provides a reference for the Coulomb counting method.

A problem encountered during calibration is that there is less margins for the electrical storage unit to handle high power charging and overvoltage in the system caused by for example sudden load dumps on a DC link connecting the electrical storage unit to the vehicle electrical system. It is also recommended to keep the current ripple low during charging since current ripple may reduce the lifetime of the battery cells. Due to this the calibration process needs to be performed with a low current into the electrical storage unit, which current should have a rather low total harmonic distortion and small ripple without transients. To obtain a transient and ripple free current other loads except the charger and the electrical storage unit connected on the DC-link may need to be turned off or running in reduced power. Consequently, the current to the electrical storage unit during calibration needs to be accurately controlled by the charger to not exceed a maximum level that could harm the electrical storage unit. This requires a relatively advanced and expensive charger with a corresponding control unit.
A further problem with this type of energy storage systems relate to pre-charging of the DC-link prior to connection of an energy storage unit to the DC-link. Pre-charging is commonly used in hybrid and electric vehicle applications. The current to the electric motors used in such vehicles is regulated by a controller that employs large capacitors in its input circuit. Such systems typically have contactors to disable the system during inactive periods and to act as an emergency disconnect should the motor current regulator fail in an active state. Without pre-charge, the high voltage across the contactors and a subsequent inrush current can cause an arc which will cause pitting of the contacts. Pre-charging circuits are used to by-pass the contactors during pre-charge of the DC-link to minimize arcing, but over time wear and tear of the components in such circuits will require repair or replacement.
A further problem relates to long distance transport or long term storage of energy storage systems or vehicles provided with such systems. Over time electrical storage systems will experience a certain amount of self-discharge. Depending on the type of storage or means of transport, a conventional system may not have access to a suitable power source for maintenance charging, as the available voltage and/or current from such power sources may vary. This requires a relatively advanced and expensive charger with a corresponding control unit.

DE102011089312 discloses a method for charging of power storage cells an energy storage device, each electrical storage unit 5 is connected to the de link 2d by a dc-dc converter 7, which is connected in series with a main contactor 6a. The electrical storage system is thus connected to the dc link when both the main contactor and the converter are operated.

DE102009027835 discloses an energy transmitter for a battery system in which the battery modules 40-1, .. .40-n are connected in series by the diodes parallel to the DC/DC converters 41-1, .. .41-n and these are parallel to contactors 44-1, .. .44-n. Both the contactor and the dc-dc converter are operated in closed or open state to respectively connect or disconnect the corresponding battery module from the dc link. The object of the invention is to provide an improved energy storage system that overcomes the above problems.

### SUMMARY

An object of the invention is to provide an arrangement in the form of an electrical storage system and a method for controlling said system, which system/method solves the above problems. The object is achieved by an arrangement and a method according to the appended claims.

In the subsequent text, the term "vehicle" is intended to cover any land vehicle or waterborne vessel comprising an electrical storage system connected to a DC-link. Further, the term "high voltage" is primarily used for systems/loads operating on voltages over 100 V, typically on 300 V or more. Similarly, the term "low voltage" is used for systems/loads typically operating on voltages in the region 12-42 V.

State of charge, or SOC, is a measure of the charge of the battery and is usually given as a percentage between 0 and 100%. The SOC can be determined by any suitable method, such as the voltage method, the current integration method, or by Kalman filtering.

According to a first aspect of the invention, the object is achieved by a device according to the appended device claims.

The invention relates to an electrical storage system, preferably for a vehicle, a vessel or similar. The electrical storage system comprises at least one electrical storage unit with a predetermined number of battery cells. The system can comprise multiple electrical storage units, which are preferably connected in parallel. The number of battery cells contained in an electrical storage unit is dependent on the voltage of each cell and the required output voltage for the electrical storage system. The one or more electrical storage units are connectable to a DC-link by a main contactor, which DC-link is arranged to supply current to or discharge current from the electrical storage system.

The DC-link can comprise one or more loads which can be operated using the electrical storage system or any other suitable source of power connected to the DC-link, such as a generator or a motor-generator. The DC-link can supply power for charging the electrical storage system by means of an external charger connectable to the DC-link, a charger integrated in the DC-link and connectable to the mains or similar, or by means of a suitable source of power as indicated above. The number of loads or the type of power sources connected to the DC-link is not relevant for the invention *per se.*

The electrical storage system can be provided with a central battery management unit for controlling the energy storage units making up the system. Sensors for monitoring one or more electrical parameters can be provided for each energy storage unit and are connected to the central battery management unit. Alternatively, the electrical storage system can be provided with a main battery management unit for monitoring the energy storage units making up the system, wherein auxiliary battery management units are provided for controlling each energy storage unit. Each auxiliary battery management unit is connected to the main battery management unit. Sensors for monitoring one or more electrical parameters can be provided for each energy storage unit and are connected to the auxiliary battery management units. It should be noted that the type, location or number of battery management units is not relevant to the invention as such.

As indicated above, the one or more electrical storage units are connectable to a DC-link by a main contactor. The electrical storage unit is further connectable to the DC-link by a DC/DC converter connected in parallel with the main contactor. In normal use, electrical power will be directed through the circuit comprising the main contactor. Under certain conditions and/or when a predetermined state is detected, electrical power will instead be directed through the parallel circuit comprising the DC/DC converter. An electrical storage system comprising more than one electrical storage unit will be arranged so that each electrical storage unit is connectable to the DC-link by a DC/DC converter connected in parallel with the main contactor of the respective electrical storage unit. As a rule, the main contactor and the DC/DC converter are controlled to connect an electrical storage system to the DC-link alternately. For instance, the DC/DC converter is regulated down and stopped once the main contactor has been closed. This is also the case prior to system shut down when the main contactor is opened. Similarly, the DC/DC converter is regulated up prior to closing the main contactor, for performing pre-charging, or prior to opening the main contactor to perform charging or calibrating.

According to a first example, an electrical storage system as described above is provided with a DC/DC converter arranged as a pre-charge circuit in parallel with the main contactor. This example relates to the alternate switching of the main contactor and the DC/DC converter, and occurs when an electrical storage unit is disconnected from the DC-link. In this case the DC/DC converter is arranged as a pre-charge circuit between the electrical storage unit and the DC-link. In order to connect an electrical storage unit to the DC-link, the DC/DC converter is controlled to reduce the inrush current to the DC-link capacitances. When the pre-charge is completed, the main contactor is closed and the DC/DC converter is regulated down and stopped whereby the electrical storage unit is connected. In this example DC/DC converter is preferably galvanically isolated.

According to an alternative first example, an electrical storage system as described above is provided with a DC/DC converter arranged as a pre-charge circuit in parallel with the main contactor. This example relates to the alternate switching of the main contactor and the DC/DC converter and an associated optional relay. In the first example, the electrical storage unit is disconnected from the DC-link. In this case the DC/DC converter and the relay are arranged as a pre-charge circuit between the electrical storage unit and the DC-link. In order to connect an electrical storage unit to the DC-link, the relay is closed and the DC/DC converter is controlled to reduce the inrush current to the DC-link capacitances. When the pre-charge is completed, the main contactor is closed and the DC/DC converter is regulated down and stopped. The relay is opened to eliminate any current leakage through the DC/DC converter. In this example DC/DC converter can be galvanically isolated, but the provision of a relay allows other types of DC/DC converters to be used.

By the provision of an electrical storage system as described in this example, it is possible to gain further advantages over a conventional system. For instance, a conventional pre-charging resistor can be replaced by the DC/DC converter. This eliminates the need for a separate pre-charging circuit for each electrical storage unit. The provision of a DC/DC converter allows the pre-charge current to be accurately controlled. The arrangement provides improved diagnostics of the pre-charge function and increases pre-charge repeatability since overheating of the pre-charge circuit is no longer an issue.

In addition, there is no need to add an extra battery charger for any low voltage (12/24 V) electrical storage units connected to the high voltage DC-link via a separate DC/DC converter since the DC-link loads can be active both during charging and calibration. The DC-link can therefore provide energy to the 12/24V electrical system as long as any one of the high voltage electrical storage units is connected. For reasons of clarity, low voltage electrical storage units will be referred to as batteries in the subsequent text.

According to a second example, an electrical storage system as described above is provided with a DC/DC converter arranged to be connected to the DC-link during at least a part of a charging cycle of the electrical storage unit. During the charging cycle, the DC/DC converter is arranged to be connected to the DC-link when a predetermined minimum state of charge (SOC) is determined for the electrical storage unit. The state of charge can be determined by detecting the voltage over the electrical storage unit during charging. The main contactor is opened and the DC/DC converter is arranged to control the charging current to the electrical storage unit. When a predetermined desired state of charge is determined for the electrical storage unit being charged the DC/DC converter is arranged to be disconnected from the DC-link. This can be done by stopping the DC/DC converter. When an optional relay is provided in series with the DC/DC converter, then the relay is opened when the DC/DC converter is stopped. If the electrical storage unit is to be connected to the DC-link, then the main contactor is closed prior to the stopping of the DC/DC converter and opening of the optional relay.

Although the above charging arrangement is described for a single electrical storage unit, it is applicable to an electrical storage system comprising multiple electrical storage units. The inventive arrangement allows each of the electrical storage units making up an electrical storage system to be charged independently.

By the provision of an electrical storage system as described above, it is possible to gain a number of advantages over a conventional system. For instance, the charger is not required to be able to control its output current with relatively high accuracy, as the current supplied to each electrical storage unit is instead controlled by the respective DC/DC converter. This results in a cost saving for the charger and also makes it possible to use less accurate charging solutions, such as a diesel engine running an electric machine as alternator.

In addition, the charger can be operated in a reduced output voltage range which increases the charging efficiency. Also, at a certain voltage level the electrical components, the connector and the circuit board inside the charger can have a lower voltage resistance. This results in a further cost saving for the charger, as well as a cost saving for the end user thanks to lower energy losses in the DC/DC converter as compared to the charger.

The provision of a DC/DC-converter in each electrical storage unit according to the invention also allows maintenance charging (trickle charging) of one or more units from a low voltage source, such as a 12 V or 24 V charger commonly used in many workshops. An advantage with this arrangement is that no part of the electrical system or the DC-link is supplied with high voltage, which provides a safer charging process. The DC/DC converter also allows for maintenance charging using any suitable power source, as the supplied voltage is adapted to the electrical storage unit. The DC/DC converter is used to control as much current as needed from the charger to reach a high enough SOC.

In a conventional vehicle having several electrical storage units which are charged at the same time, the units will reach the desired SOC at different times due to tolerances in each of the electrical storage units and the DC-link supplying power to the electrical storage unit. Also when reaching the desired SOC the current supplied by a conventional charger needs to be adapted to that electrical storage unit which comes closest to the desired SOC, which slows down the calibration for the remaining electrical storage units.

An electrical storage system comprising electrical storage units with for example lithium iron phosphate (LiFePO₄) chemistry has a very flat voltage vs. SOC (State Of Charge) curve within a big span of its usable SOC-window and it can be difficult to determine its actual SOC. It is desirable to be able to determine the actual SOC in order to maintain a good lifetime of the electrical storage system. When propelling a vehicle the power is supplied and discharged at relatively high power levels and occurs in the region where the voltage vs SOC curve is substantially flat. There are several ways of calculating the SOC and a common one is to use coulomb counting but the methods used suffer from lack of reference and drift over time when repeatedly charging and discharging power from the electrical storage system. Eventually the actual SOC status for the respective electrical storage units will be lost.

Normally the voltage vs SOC curve has a relatively steep characteristic at high SOC and low SOC but at these extreme sections of the curve it is not recommended to charge or discharge a lot of power since this will affect the lifetime of the electrical storage units. One way to determine the actual SOC is to charge the electrical storage units with enough energy to find a certain voltage level which, dependent on the design of the electrical storage units, correspond to a certain SOC. In the subsequent text this process is referred to as calibration of the electrical storage units making up the electrical storage system, which process provides a reference for the coulomb counting method. Calibration of the cells in an electrical storage unit can in this case be done for a SOC range of around 90 to 95% where the charge voltage is significantly increasing.

When performing the calibration, and while the energy is increased in the electrical storage units, there is less margin for the electrical storage units to handle high power charging and overvoltage in the system caused by for example sudden load dumps on the DC link. It is also desirable to keep the current ripple low during charging since current ripple may reduce the lifetime of the battery cells. For these reasons, the calibration process is performed with a low current into the electrical storage units, which current has a rather low THD and small ripple without transients. The total harmonic distortion, or THD, of a signal is a measurement of the harmonic distortion present and is defined as the ratio of the sum of the powers of all harmonic components to the power of the fundamental frequency. In power systems, a low THD means that, for instance, peak currents or transients are reduced. To obtain a transient and ripple free current other loads, except the charger and the electrical storage units connected on the DC-link, may need to be turned off or be running at reduced power. The current to the electrical storage units during calibration needs to be controlled by the DC/DC converter for each electrical storage unit to not exceed a maximum level to not harm the electrical storage units. This can be done by reducing the current as the SOC in the respective electrical storage units increase.

This is the preferred solution since it optimizes the time during the calibration process to be as short as possible since the electrical storage units can be charged with as much energy as possible without reducing lifetime.

According to the invention, the DC/DC converter in each electrical storage unit allows for individual current adaptation so that calibration can be performed in parallel for all electrical storage units. In the inventive system it is of no consequence that the electrical storage units will reach the desired SOC at different times. In this way, time can be saved during the calibration process, especially for a vehicle with multiple electrical storage units, making the vehicle operational quicker. In addition, other loads connected to the DC-link can be used simultaneously as the calibration is carried out. This can, for instance, improve the comfort for a user if accessories such as the climate system can be operated to cool/heat the driver's compartment during charging/calibration.

According to a third example, an electrical storage system can comprise multiple electrical storage units, each with an individual DC/DC converter. The DC/DC converters can be arranged to equalize the voltage between electrical storage units, as will be described below.

Due to tolerance variations in the battery cells in an electrical storage unit the cells can have unequal voltages after some time of usage of the electrical storage unit. Consequently, the SOC of the individual cells can be different. Normally a number of cells are connected in series to build up the wanted voltage of the electrical storage unit (a combination of parallel and serial connected cells are possible, but this example is limited to serial connection). All the serial connected cells in an electrical storage unit share the same current during charging and discharging but the voltage over them will eventually differ over time. To avoid damaging the electrical storage unit at high voltage it is the cell with the highest SOC that limits the possible upper energy level that can be charged into the electrical storage unit to avoid a reduction of the battery lifetime. Cell voltage balancing can be performed with or without the electrical storage unit being connected to the DC-link.

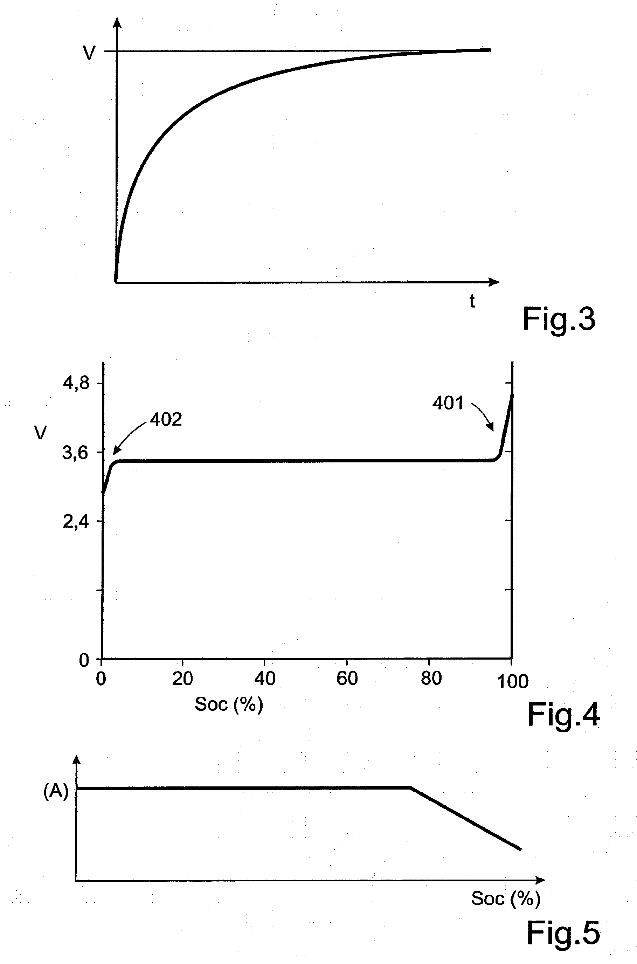

The balancing process involves charging the electrical storage unit to a level of state of charge high enough to reach the steep portion of its voltage vs. SOC curve (cf. Figure 4). This charging step is often referred to as calibration and allows the state of charge of the electrical storage unit to be determined. Due to an imbalance in the electrical storage unit one or more cells will reach a predetermined charge level before the remaining cells. As it is not allowable to charge any cell over a maximum level, the charging is interrupted at this point in order to avoid cell damage. The state of charge is then determined for each cell that has reached its predetermined charge level in the steep portion of the voltage vs. SOC curve. The charge in these one or more cells is reduced by bleeding energy through a discharge resistor until they reach the lowest determined state of charge for any one cell in the electrical storage unit. This discharging step is often referred to as balancing and allows the state of charge of the cells in the electrical storage unit to be equalised. The charging of the electrical storage unit is then repeated until one or more cells will reach a predetermined charge level. The state of charge is again determined for each cell that has reached its maximum charge level and the charge in these one or more cells is reduced by bleeding energy through the discharge resistor until they reach the lowest determined state of charge. The above charge and discharge steps are performed until all cells in the electrical storage unit has a predetermined, sufficiently even state of charge.

This process description relates to calibration at a high SOC. A similar process can be performed by calibrating the cells at a low SOC.

A similar case can be made for an electrical storage system comprising multiple energy storage units. The time for cell voltage balancing for one electrical storage unit can be different from another electrical storage unit and so also the target voltage for the cell voltage balancing. Thus, when cell voltage balancing in one electrical storage unit is done another electrical storage unit may still be balancing its cells and its total electrical storage unit voltage may be different from another electrical storage unit. When connecting the electrical storage unit to the DC-link the voltage may differ from another electrical storage unit that is connected to the DC-link but only to a certain extent. If the voltage difference is too high there will be a high inrush current causing a light bow in the contactor which eventually reduces its life time and there is risk of damaging the electrical storage unit.

By the provision of an electrical storage system as described in this example, it is possible to transfer energy from electrical storage units with higher voltage to an electrical storage unit with lower voltage if the voltage between two or more electrical storage units differs.

In order to balance an electrical storage system comprising multiple storage units, the storage units are charged until a first storage unit reaches its maximum charge level. This can involve charging this storage unit to a state of charge located in the steep portion of its voltage vs. SOC curve (cf. Figure 4). The DC/DC converter is then used for discharging the fully charged storage unit to a lower level by supplying charge to a storage unit that has not yet reached its maximum charge. These steps can be performed in sequence for each subsequent storage unit, until a common charge level has been reached.

This arrangement allows energy to be saved. Further, by controlling the individual DC/DC converters it is possible to reduce the inrush/outrush current of its respective electrical storage unit as the electrical storage unit voltage can be made substantially equal to the DC-link voltage before the respective main contactor is closed. This arrangement is expected to improve the life time of the electrical storage unit and any contactor or relay provided therein.

A suitable DC/DC converter for use in an electrical storage system according to the invention as described above is a bi-directional DC/DC converter.

In practical use it can be advantageous if the parallel circuit comprises a relay connected in series with the DC/DC converter in the examples described above. More specifically, the electrical storage unit can be connected to the DC-link by a circuit parallel with the circuit comprising the main contactor, which parallel circuit comprises the DC/DC converter and a relay connected in series. The DC/DC converter can then be galvanically isolated from the circuit by opening the relay, i.e. when the main contactor is closed. Such an arrangement is advantageous for preventing current leakage through the DC/DC converter and/or when using a DC/DC converter that is not galvanically isolated.

The invention further relates to a vehicle comprising an electrical storage system as described above.

According to a second aspect of the invention, the above-mentioned object is achieved by means of the appended method claims.

The method involves controlling an electrical storage system, preferably for a vehicle, which system comprises at least one electrical storage unit with a predetermined number of battery cells. The electrical storage unit is connectable to a DC-link by a main contactor, which DC-link is arranged to supply current to or discharge current from the electrical storage system. The method comprises the steps of:
- detecting a current state of the at least one electrical storage unit;
- comparing the current state with a desired state of at least one electrical storage unit;
- routing current to a DC/DC converter connected in parallel with the main contactor when the main contactor is disconnected; and
- controlling the DC/DC converter to regulate the supply or discharge of current and/or voltage in response to the comparison.

According to a first example, the method involves controlling the DC/DC converter to perform a pre-charge prior to closing the main contactor and connecting an electrical storage unit to the DC-link. The DC/DC converter is controlled to limit the inrush current into the DC-link capacitances by gradually increasing the current through the DC/DC converter, when it is desired to connect the electrical storage unit to the DC-link. In this case, the output current from the DC/DC converter is detected and compared to a desired current to be supplied by the electrical storage unit. The main contactor is closed when the current difference is zero, or substantially zero. When closing the main contactor, a detected voltage difference over the contactor must be small enough to avoid damage. This method step can be applied to each electrical storage unit making up the system.

According to a second example, the method involves controlling the DC/DC converter to increase or decrease the input voltage from a charger in response to a determined state of charge. During the charging cycle, the DC/DC converter is arranged to be connected to the DC-link when a predetermined state of charge (SOC) is determined for the electrical storage unit. The main contactor is opened and the DC/DC converter is arranged to control the charging current to the electrical storage unit. When a predetermined desired state of charge is determined for the electrical storage unit being charged the DC/DC converter is arranged to be disconnected from the DC-link. This can be done by stopping the DC/DC converter. If an optional relay is provided in series with the DC/DC converter, then the relay is opened. The method allows each of the electrical storage units making up an electrical storage system to be charged independently.

According to a third example, the method involves controlling each DC/DC converter individually to equalise the voltage between electrical storage units when different voltages are detected in the electrical storage units. In this way the respective DC/DC converter can control the output voltage from each electrical storage unit before its corresponding main contactor is closed to connect it to the DC-link.

In addition, the method can comprise a further step of controlling the DC/DC converter to regulate the power into an electrical storage unit from a charger during calibration and balancing of the electrical storage unit. As for the charging process, each DC/DC converter can be controlled individually to regulate the power into its corresponding electrical storage unit from a charger during calibration and balancing of multiple cells in the electrical storage units, as described above.

The above-mentioned method steps can also be performed while controlling the current to the DC/DC converter by a relay connected in series with the DC/DC converter and in a circuit parallel with the circuit comprising the main contactor.

According to a third aspect of the invention, the above-mentioned object is achieved by means a computer program comprising program code means for performing the method steps as described above, when said program is run on a computer. The invention further relates to a computer readable medium carrying a computer program comprising program code means for performing the method steps described above when said program product is run on a computer. Finally, the invention relates to a control unit for controlling an electrical storage system, the control unit being configured to perform the method steps described above.

Further advantages and advantageous features of the invention are disclosed in the following detailed description and in the dependent claims.

### BRIEF DESCRIPTION OF THE DRAWINGS

In the following text, the invention will be described in detail with reference to the attached drawings. These schematic drawings are used for illustration only and do not in any way limit the scope of the invention. In the drawings:
- Figure 1: shows a schematic view of a vehicle provided with an electrical storage system according to the invention;
- Figure 2a: shows a schematic view of an electrical storage system according to a first embodiment of the invention;
- Figure 2b: shows a schematic view of an electrical storage system according to an alternative embodiment of the invention;
- Figure 3: shows a schematic diagram of voltage over time during a pre-charge mode;
- Figure 4: shows a schematic voltage vs SOC graph;
- Figure 5: shows a schematic charging current vs SOC graph

### DETAILED DESCRIPTION OF EXAMPLE EMBODIMENTS OF THE INVENTION

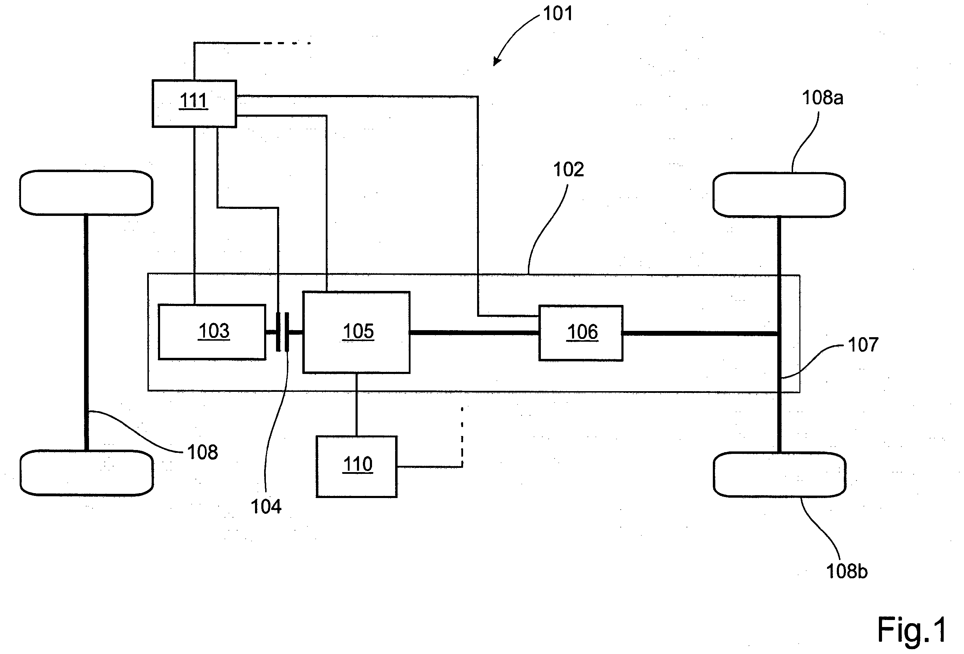

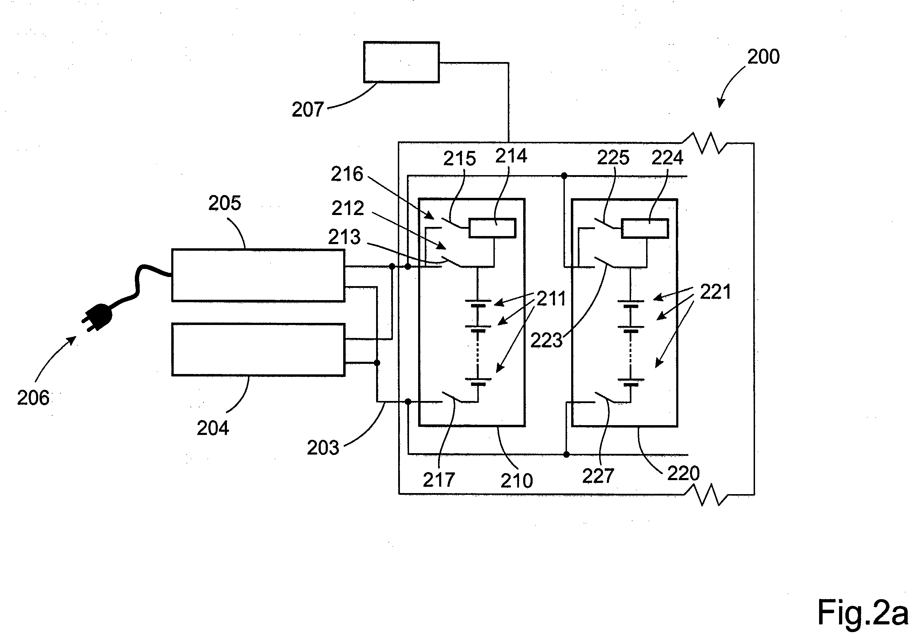

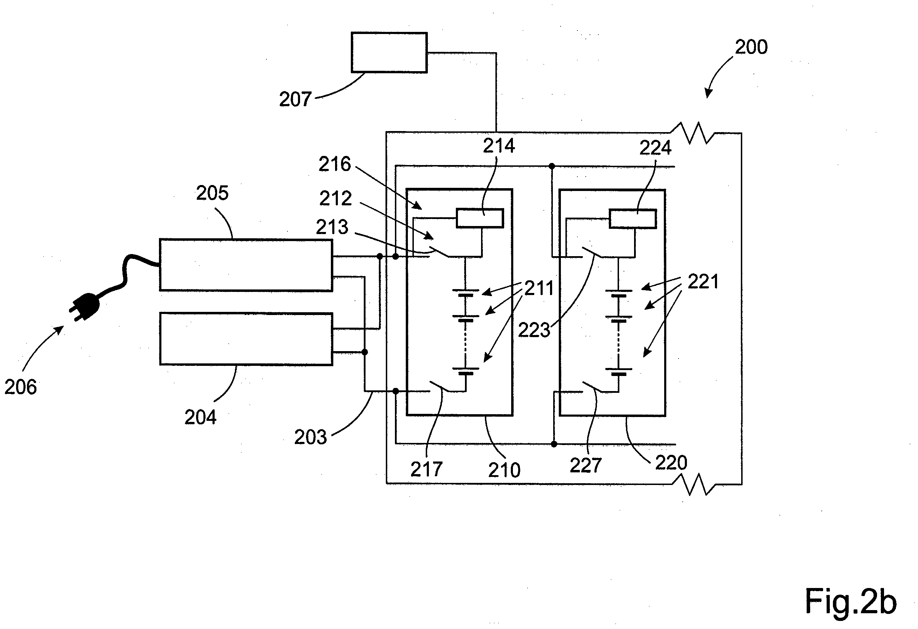

Figure 1 shows a schematic view of a hybrid vehicle 101, although the invention is also applicable to electric vehicles or vehicles in general comprising an electric storage system as described in the subsequent text. The vehicle 101 is provided with a powertrain 102 which comprises an internal combustion engine (ICE) 103, a clutch 104, an electric machine (EM) 105, a gearbox 106 and a driven axle 107 connected to a pair of traction wheels 108a and 108b. The driven axle 107 is connected to an output shaft of the electric machine 105 via the gearbox 106. An input shaft of the electric machine 105 is connected to the engine 103 via the clutch 104. The vehicle further comprises a second axle 108, which is shown as a non-driven axle in Figure 1. The second axle 108 can also be an electrically driven axle. An electric storage system 110 is provided for supplying or receiving power to/from the electric machine 105 and for supplying power to auxiliary loads in the vehicle. The powertrain 102 is further connected to an electronic control unit (ECU) 111 which is arranged to control the powertrain 102. The ECU 111 is also connected to relevant sensors and/or other control units for collecting relevant data for the control of the power train 102, e.g. sensors for engine speed, clutch position, gear selection, state of charge (SOC) of the electric storage system 110, exhaust emissions. The ECU 111 can also comprise a battery management unit (BMU) for controlling the electric storage system 110 and individual battery storage units (see Fig.2a and b) making up the electric storage system. A connection between the ECU 111 and the electric storage system 110 is schematically indicated in the figure 1.

Figure 2a shows a schematic view of an electrical storage system 200 according to a first embodiment of the invention. The electrical storage system 200, indicated in dash-dotted lines in Figure 2a, can be used as an electric storage system 110 in the vehicle shown in Figure 1. The electrical storage system 200 comprises multiple electrical storage units 210, 220 (only two shown in Fig.2a and 2b) each containing a predetermined number of battery cells 211; 221 connected in series. The number of cells in each electrical storage unit 210, 220 is selected to supply a desired voltage and the respective electrical storage units 210, 220 are connected in parallel to form the electrical storage system 200.

One pole of a first electrical storage unit 210 is connectable to a DC-link 203 via a first circuit 212 comprising a main contactor 213, which DC-link 203 is arranged to supply current to or discharge current from the electrical storage system 210. In Figure 2a, this is indicated as the positive pole. The first electrical storage unit 210 is also connectable to the DC-link 203 by a DC/DC converter 214 and a relay 215 located in a second circuit 216, arranged in parallel with the first circuit 212 comprising the main contactor 213. The relay 215 located in the second circuit 216 is optional, but is included in this example to indicate that the first electrical storage unit 210 can be galvanically isolated from the DC-link 203. For the same reason, a second contactor 217 is provided at the negative pole of the first electrical storage unit 210.

A second electrical storage unit 220 is connectable to the DC-link 203 in the same way as the first electrical storage unit 210. Similarly, the second electrical storage unit 220 comprises parallel circuits comprising a main contactor 223, a DC/DC converter 224, a relay 225, as well as a second contactor 227, respectively. This arrangement is repeated in each consecutive electrical storage unit making up the electrical storage system 200.

The DC-link 203 is connected to at least one load 204 (one shown) and can also be connected to a charger 205 provided with a suitable connector 206 for connecting the charger to a source of power, e.g. the mains. The load 204 schematically indicated in Figure 2a can be any one of a number of high voltage loads in a vehicle, such as an electric motor or a DC/DC converter for supplying low voltage loads. The electrical storage system 200 is controlled by a battery management unit, or BMU 207.

Generally, BMU topologies mainly fall in 3 categories, that is, centralized, distributed or modular arrangements. Centralized arrangements comprise a single BMU that is connected to the battery cells through multiple wires. Distributed arrangements comprise a BMU installed at each cell, with just a single communication cable between the battery and a controller. Modular arrangements comprise a few BMUs, each handing a certain number of cells (e.g. a unit as described above), with communication between the BMUs. Figure 2a shows a schematically indicated BMU 207, as the invention can be used in any of the BMU topologies described above.

The system shown in Figure 2a can perform the function of a high voltage pre-charge circuit in order to minimize the peak current out from an electrical storage unit 210, 220 by slowing down the *dI ldt* of the current used to pre-charge the DC-link 203. In the case of the first electrical storage unit 210 in Figure 2a, the pre-charge mode would involve closing the second contactor 217, controlling the DC/DC converter to zero output and closing the relay 215. Pre-charging is started by controlling the DC/DC converter to increase its output at a predetermined rate, so that the DC-link voltage will rise slowly and controllably with power-up current never exceeding a predetermined maximum allowed current. Figure 3 shows a schematic diagram of voltage increase over time during a pre-charge mode. As the circuit voltage approaches near steady state, then the pre-charge function is complete. Normal operation of a pre-charge circuit is to terminate pre-charge mode when the circuit voltage is, for instance, 90% to 95% of the operating voltage. Upon completion of pre-charging, the main contactor 213 is closed and the DC/DC converter 214 is switched out of the power supply circuit by opening the relay 215 (see figure 2a). The high voltage loads are then powered up sequentially.

Additional electrical storage units are connected to the DC-link in the same way. When connecting further electrical storage units to the DC-link the voltage may differ from the unit or units already connected to the DC-link. In such cases the DC/DC converter can be used to control inrush/outrush currents in the same way as described above.

The arrangement in Figure 2a does not require an extra battery charger for one or more low voltage (12/24 V) batteries since the DC-link loads can be active during charging/calibration The DC-link can therefore provide energy to the 12/24V electrical system as long as any one of the high voltage electrical storage units is connected.

The provision of a DC/DC-converter 214, 224 in each electrical storage unit 210, 220 according to the invention also allows maintenance charging (trickle charging) of one or more units 210, 220 from a low voltage source, such as a 12 or 24 V charger commonly used in many workshops. An advantage with this arrangement is that no part of the electrical system or the DC-link 204 is supplied with high voltage, which provides a safer charging process.

In the electrical storage system shown in Figure 2a, the DC/DC converter 214, 224 is arranged to be connected to the DC-link 203 during at least a part of a charging cycle of the electrical storage unit 210, 220. During the charging cycle, the DC/DC converter 214, 224 is arranged to be connected to the DC-link 203 when a predetermined state of charge (SOC) for the electrical storage unit 210, 220 is determined by the battery management unit 207. The main contactor 213, 223 is opened and the DC/DC converter 214, 224 is arranged to control the charging current to the electrical storage unit 210, 220. When the predetermined desired state of charge is determined for the electrical storage unit 210, 220 being charged the DC/DC converter 214, 224 is arranged to be stopped and disconnected from the DC-link 203 using the relay 212, 225. The main contactor 213, 223 can then be closed in order to supply power to the DC-link and the relay 215, 225 is opened to isolate the DC/DC converter.

In a parallel circuit where the relay 215, 225 is not provided (see figure 2b), a galvanically isolated DC/DC converter is used. In this case it is sufficient to merely stop the DC/DC converter after the main contactor 213, 223 has been closed.

Although the above charging arrangement is described for a single electrical storage unit, it is applicable to an electrical storage system comprising any desired number of electrical storage units. The inventive arrangement allows each of the electrical storage units 210, 220 making up an electrical storage system 200 to be charged independently.

Figure 2b shows a schematic view of an electrical storage system according to an alternative embodiment of the invention. The system in Figure 2b shows the first electrical storage unit 210 having a parallel circuit 212, 216 comprising a first circuit 212 with a main contactor 213 and a second circuit 216 but without the relay 215 connected in series with the DC/DC converter 214. Hence, the electrical storage unit 210 can be connected to the DC-link 203 by either the main contactor 213 or by the DC/DC converter 214. The DC/DC is stopped and disconnected from the circuit whenever the main contactor is closed. The second circuit 216 is disconnected by controlling the DC/DC converter 214 to interrupt the current through the circuit 216 once the main contactor is closed. This embodiment is intended to indicate that the relay 215 in Figure 2a is optional when the DC/DC converter 214 is galvanically isolated. When galvanically isolated an additional relay is not required for eliminating any current leakage through the DC/DC converter. This is also applicable to the relay 225 in the second electrical storage unit 220 and any additional units.

An example of a voltage vs SOC graph is shown in Figure 4, in this case for a Li-ion cell. Normally a voltage vs SOC curve has a steep characteristic at high SOC 401 and low SOC 402 but at these extreme sections of the curve it is not recommended to charge or discharge a lot of power since this will affect the lifetime of the electrical storage units. One way to determine the actual SOC is to charge the electrical storage units with enough energy to find a certain voltage level which, dependent on the design of the electrical storage units, correspond to a certain SOC. This process is referred to as calibration of the cells making up the electrical storage units, which process provides a reference for the Coulomb counting method. Figure 4 shows the typical voltage vs SOC graph for a lithium iron phosphate battery cell. Calibration of the cells in an electrical storage unit can in this case be done for a SOC of around 90 to 95% where the charge voltage is significantly increasing, as indicated in Figure 4, at 401.

When performing the calibration, and while the energy is increased in the electrical storage units, there is less margin for the electrical storage units 210, 220 in Figs. 2a-2b to handle high power charging and overvoltage in the system caused by for example sudden load dumps on the DC link 203. It is also desirable to keep current ripple low during charging since current ripple may reduce the lifetime of the battery cells 211, 221. The calibration process is performed with a low current into the electrical storage units 210, 220, which current has a rather low total harmonic distortion and small ripple without transients. The total harmonic distortion, or THD, of a signal or a current is a measurement of the harmonic distortion present and is defined as the ratio of the sum of the powers of all harmonic components to the power of the fundamental frequency. In power systems, a low THD means that, for instance, peak currents are reduced. To obtain a transient and ripple free current other loads 204, except the charger 205 and the electrical storage units 210, 220 connected on the DC-link 203, are turned off or operated at reduced power. The current to the electrical storage units 210, 220 during calibration needs to be controlled by the DC/DC converter 214, 224 for each electrical storage unit 210, 220 to not exceed a maximum level to not harm the electrical storage units 210, 220. This can be done by reducing the current as the SOC in the respective electrical storage units 210, 220, as indicated in Figure 5 showing a schematic graph for SOC (%) vs charging current.

As shown in Figures 2a-2b, the electrical storage system can comprise multiple electrical storage units 210, 220 (only two shown), each with an individual DC/DC converter 214, 224. Due to tolerance variations in the battery cells 211, 221 in the respective electrical storage unit 210, 220 the cells 211, 221 can have unequal voltages after some time of usage of the electrical storage unit. Over time the SOC of the individual cells will differ. All the serial connected cells 211, 221 in the respective electrical storage unit 210, 220 share the same current during charging and discharging but the voltage over them will eventually differ over time. In order to correct this, a balancing process combined with calibration step is carried out for each electrical storage unit 210, 220.

The balancing process involves charging the electrical storage unit 210, 220 to a level of state of charge high enough to reach the steep portion of its voltage vs. SOC curve (cf. Figure 4). This charging step, or calibration, allows the state of charge of the electrical storage unit 210, 220 to be determined. Due to an imbalance in the electrical storage unit 210, 220 one or more cells 211, 221 will reach a predetermined charge level before the remaining cells. As it is not allowable to charge any cell over the maximum level, the charging is interrupted at this point in order to avoid cell damage. The state of charge is then determined for each cell that has reached its maximum charge level in the steep portion 401 of the voltage vs. SOC curve (Figure 4). The charge in these one or more cells 211, 221 is reduced by bleeding energy through a discharge resistor (not shown) until they reach the lowest determined state of charge for any one cell in the electrical storage unit 210, 220. This discharging step is referred to a balancing and allows the state of charge of the cells 211, 221 in the electrical storage unit 210, 220 to be equalised. The charging the electrical storage unit 210, 220 is then repeated until one or more cells 211, 221 will reach a maximum charge level. The state of charge is again determined for each cell that has reached its maximum charge level and the charge in these one or more cells 211, 221 is reduced by bleeding energy through the discharge resistor until they reach the lowest determined state of charge. The above charge and discharge steps are performed until all cells 211, 221 in the electrical storage unit 210, 220 has a predetermined, sufficiently even state of charge.

Balancing the voltage cells 211, 221 within the electrical storage unit 210, 220 is done by bleeding energy from the cell through a discharge resistor (not shown) associated with the respective cell. When a common voltage level is reached then the cell balancing is stopped. Cell voltage balancing can be performed with or without the electrical storage unit 210, 220 being connected to the DC-link 203.

The DC/DC converter 214, 224 in each electrical storage unit 210, 220 allows for individual current adaptation so that calibration can be performed in parallel for all electrical storage units 210, 220. In the inventive system it is of no consequence that the electrical storage units 210, 220 will reach the desired SOC at different times. In this way, time can be saved during the calibration process, especially for a vehicle with multiple electrical storage units 210, 220, making the vehicle operational quicker. In addition, other loads 204 connected to the DC-link 203 can be used simultaneously as the calibration is carried out. This can, for instance, improve the comfort for a user if accessories such as the climate system can be operated to cool/heat the driver's compartment during charging and/or calibration. A suitable DC/DC converter for the purpose described above is a bi-directional DC/DC converter.

The DC/DC converters 214, 224 can be used for equalizing the voltage between the electrical storage units 210, 220. As the time for cell voltage balancing for one electrical storage unit 210 can be different from another electrical storage unit 220. Hence, when the calibration/balancing in one electrical storage unit is done another electrical storage unit may still be balancing its cells 211, 221 and its total electrical storage unit voltage may be different from other electrical storage units in the electrical storage system. When connecting one electrical storage unit 210 to the DC-link 203 the voltage may differ from another electrical storage unit 220 that is connected to the DC-link 203.

In a conventional system, if the voltage difference between different units is too high there will be a high inrush current causing a light bow in the contactor of the unit to be connected. Such occurrences eventually reduce the life time and there is risk of damaging the electrical storage unit.
In the electrical storage system as shown in Figure 2a-2b, it is possible to transfer energy from electrical storage units with higher voltage to an electrical storage unit with lower voltage if the voltage between two or more electrical storage units differs. This arrangement allows energy to be saved. Further, by controlling the individual DC/DC converters 214, 224 it is possible to reduce the inrush/outrush current of its respective electrical storage unit 210, 220 as the electrical storage unit voltage can be made substantially equal to the DC-link voltage before the respective main contactor 213, 223 is closed. This arrangement is expected to improve the life time of the electrical storage unit and any contactor or relay provided therein.
It is to be understood that the present invention is not limited to the embodiments described above and illustrated in the drawings; rather, the skilled person will recognize that many changes and modifications may be made within the scope of the appended claims.

## Claims

1. An electrical storage system for a vehicle, comprising at least one electrical storage unit (210, 220) with a predetermined number of battery cells (211, 221), which electrical storage unit (210, 220) is connectable to a DC-link (203) by a main contactor (213, 223), which DC-link (203) is arranged to supply current to or discharge current from the electrical storage system, wherein the electrical storage unit (210, 220) is connectable to the DC-link (203) by a DC/DC converter (214, 224), **characterized in that** the DC/DC converter (214, 224) is connected in a circuit (216) parallel with the main contactor (213, 223), and where the main contactor (213, 223) and the DC/DC converter (214, 224) are arranged to be operated alternately to connect the electrical storage system to the DC-link (203).

2. An electrical storage system according to claim 1, **characterized in that** each electrical storage unit (210, 220) is connectable to the DC-link (203) by the DC/DC converter (214, 224) connected in parallel with its main contactor (213, 223).

3. An electrical storage system according to any one of claims 1-2, **characterized in that** the DC/DC converter (214, 224) is arranged to be connected to the DC-link (203) during at least a part of a charging cycle of the electrical storage unit (210, 220), preferably such that the DC/DC converter (214, 224) is arranged to be connected to the DC-link (203) when a predetermined state of charge is determined for the electrical storage unit (210, 220), or for example such that the DC/DC converter (214, 224) is arranged to control the charging current to the electrical storage unit (210, 220).

4. An electrical storage system according to 3, **characterized in that** the DC/DC converter (214, 224) is arranged to be disconnected from the DC-link (203) when a predetermined state of charge is determined for the electrical storage unit (210, 220).

5. An electrical storage system according to any one of claims 1-4, **characterized in that** the DC/DC converter (214, 224) is arranged as a pre-charge circuit between the electrical storage unit (210, 220) and the DC-link (203).

6. An electrical storage system according to any one of claims 1-5, **characterized in that** in a system comprising multiple electrical storage units (210, 220) the DC/DC converters (214, 224) are arranged to equalize the voltage between electrical storage units (210, 220), or that the parallel circuit comprises a relay (215, 225) connected in series with the DC/DC converter (214, 224).

7. A vehicle comprising an electrical storage system according to any one of claims 1-6.

8. A method for controlling an electrical storage system for a vehicle, the system comprising at least one electrical storage unit (210, 220) with a predetermined number of battery cells, which electrical storage unit (210, 220) is connectable to a DC-link (203) by a main contactor (213, 223), which DC-link (203) is arranged to supply current to or discharge current from the electrical storage system, **characterized by** the steps of;
- detecting a current state of the at least one electrical storage unit (210, 220);
- comparing the current state with a desired state of at least one electrical storage unit (210, 220);
- routing current to a DC/DC converter (214, 224) connected in parallel with the main contactor (213, 223) when the main contactor (213, 223) is disconnected; and
- controlling the DC/DC converter (214, 224) to regulate the supply or discharge of current and/or voltage in response to the comparison.

9. A method according to claim 8, **characterized by** controlling the DC/DC converter (214, 224) to limit the inrush current into the DC-link (203) capacitances, when it is desired to connect an electrical storage unit (210, 220) to the DC-link (203).

10. A method according to claim 8 or 9, **characterized by** controlling the DC/DC converter (214, 224) to increase or decrease the input voltage from a charger in response to a determined state of charge.

11. A method according to any one of claims 8-10, **characterized by** controlling each DC/DC converter (214, 224) individually during connection to equalise the voltage between electrical storage units (210, 220) when different voltages are detected in the electrical storage units (210, 220), or by controlling the DC/DC converter (214, 224) to regulate the power into an electrical storage unit (210, 220) from a charger during calibration of the electrical storage unit (210, 220).

12. A method according to claim 8-11, **characterized by** controlling each DC/DC converter (214, 224) individually to regulate the power into its corresponding electrical storage unit (210, 220) from a charger during calibration of multiple electrical storage units (210, 220).

13. A method according to claim 8-12, **characterized by** controlling the DC/DC converter (214, 224) when a predetermined state of charge is determined.

14. A method according to claim 8-13, **characterized by** connecting the main contactor (213, 223) and disconnecting the DC/DC converter (214, 224) when a determined state of charge equals a predetermined state of charge, or by controlling the current to the DC/DC converter (214, 224) by a relay (215, 225) connected in series with the DC/DC converter (214, 224) and in parallel with the main contactor (213, 223).

15. A computer program comprising program code means for performing the steps of any of claims 8-14 when said program is run on a computer.

## Patentansprüche

1. Elektrisches Speichersystem für ein Fahrzeug umfassend wenigstens eine elektrische Speichereinheit (210, 220) mit einer vorherbestimmten Anzahl an Batteriezellen (211, 221), wobei die elektrische Speichereinheit (210, 220) durch ein Hauptschütz (213, 223) mit einem Gleichspannungs-Zwischenkreis (203) verbindbar ist, wobei der Gleichspannungs-Zwischenkreis (203) so ausgelegt ist, dass er dem elektrischen Speichersystem Strom zuführt oder Strom von ihm abführt, wobei die elektrische Speichereinheit (210, 220) durch einen DC/DC-Wandler (214, 224) mit dem Gleichspannungs-Zwischenkreis (203) verbindbar ist, **dadurch gekennzeichnet, dass** der DC/DC-Wandler (214, 224) in einem Schaltkreis (216) mit dem Hauptschütz (213, 223) parallel geschaltet ist, und wobei das Hauptschütz (213, 223) und der DC/DC-Wandler (214, 224) so ausgelegt sind, dass sie abwechselnd betätigt werden, um das elektrische Speichersystem mit dem Gleichspannungs-Zwischenkreis (203) zu verbinden.

2. Elektrisches Speichersystem nach Anspruch 1, **dadurch gekennzeichnet, dass** jede elektrische Speichereinheit (210, 220) mit dem Gleichspannungs-Zwischenkreis (203) durch den DC/DC-Wandler (214, 224) verbindbar ist, der mit seinem Hauptschütz (213, 223) parallel geschaltet ist.

3. Elektrisches Speichersystem nach einem der Ansprüche 1-2, **dadurch gekennzeichnet, dass** der DC/DC-Wandler (214, 224) so ausgelegt ist, dass er mit dem Gleichspannungs-Zwischenkreis (203) während wenigstens eines Teils eines Ladezyklus der elektrischen Speichereinheit (210, 220) verbunden wird, vorzugsweise derart, dass der DC/DC-Wandler (214, 224) für ein Verbinden mit dem Gleichspannungs-Zwischenkreis (203) ausgelegt ist, wenn ein vorherbestimmter Ladezustand für die elektrische Speichereinheit (210, 220) bestimmt wird, oder beispielsweise derart, dass der DC/DC-Wandler (214, 224) so ausgelegt ist, dass er den Ladestrom zu der elektrischen Speichereinheit (210, 220) steuert.

4. Elektrisches Speichersystem nach Anspruch 3, **dadurch gekennzeichnet, dass** der DC/DC-Wandler (214, 224) so ausgelegt ist, dass er von dem Gleichspannungs-Zwischenkreis (203) entkoppelt wird, wenn ein vorherbestimmter Ladezustand für die elektrische Speichereinheit (210, 220) bestimmt wird.

5. Elektrisches Speichersystem nach einem der Ansprüche 1-4, **dadurch gekennzeichnet, dass** der DC/DC-Wandler (214, 224) als ein Vorladekreis zwischen der elektrischen Speichereinheit (210, 220) und dem Gleichspannungs-Zwischenkreis (203) ausgelegt ist.

6. Elektrisches Speichersystem nach einem der Ansprüche 1-5, **dadurch gekennzeichnet, dass** in einem System, das mehrere elektrische Speichereinheiten (210, 220) aufweist, die DC/DC-Wandler (214, 224) so ausgelegt sind, dass sie die Spannung zwischen elektrischen Speichereinheiten (210, 220) ausgleichen oder dass der parallele Schaltkreis ein Relais (215, 225) aufweist, das mit dem DC/DC-Wandler (214, 224) in Serie geschaltet ist.

7. Fahrzeug, das ein elektrisches Speichersystem nach einem der Ansprüche 1-6 aufweist.

8. Verfahren zum Steuern eines elektrischen Speichersystems für ein Fahrzeug, wobei das System wenigstens eine elektrische Speichereinheit (210, 220) mit einer vorherbestimmten Anzahl von Batteriezellen aufweist, wobei die elektrische Speichereinheit (210, 220) durch ein Hauptschütz (213, 223) mit einem Gleichspannungs-Zwischenkreis (203) verbindbar ist, wobei der Gleichspannungs-Zwischenkreis (203) so ausgelegt ist, dass er dem elektrischen Speichersystem Strom zuführt oder Strom von ihm abführt, **gekennzeichnet durch** die Schritte:
- Erfassen eines gegenwärtigen Zustands der wenigstens einen elektrischen Speichereinheit (210, 220);
- Vergleichen des gegenwärtigen Zustands mit einem gewünschten Zustand von wenigstens einer elektrischen Ladeeinheit (210, 220);
- Leiten von Strom zu einem DC/DC-Wandler (214, 224), der mit dem Hauptschütz (213, 223) parallel geschaltet ist, wenn das Hauptschütz (213, 223) entkoppelt ist; und
- Steuern des DC/DC-Wandlers (214, 224), um die Zufuhr oder Abfuhr von Strom und/oder Spannung in Reaktion auf den Vergleich zu regulieren.

9. Verfahren nach Anspruch 8, **gekennzeichnet durch** Steuern des DC/DC-Wandlers (214, 224), um den Einschaltstrom in die Kapazitäten des Gleichspannungs-Zwischenkreises (203) zu begrenzen, wenn es gewünscht ist, eine elektrische Speichereinheit (210, 220) mit dem Gleichspannungs-Zwischenkreis (203) zu verbinden.

10. Verfahren nach Anspruch 8 oder 9, **gekennzeichnet durch** Steuern des DC/DC-Wandlers (214, 224), um die Eingangsspannung von einer Ladevorrichtung in Reaktion auf einen bestimmten Ladezustand zu erhöhen oder zu verringern.

11. Verfahren nach einem der Ansprüche 8-10, **gekennzeichnet durch** individuelles Steuern jedes DC/DC-Wandlers (214, 224) während der Verbindung, um die Spannung zwischen elektrischen Speichereinheiten (210, 220) auszugleichen, wenn verschiedene Spannungen in den elektrischen Speichereinheiten (210, 220) erfasst werden, oder durch Steuern des DC/DC-Wandlers (214, 224), um die Leistung in eine elektrische Speichereinheit (210, 220) von einer Ladevorrichtung während der Kalibrierung der elektrischen Ladeeinheit (210, 220) zu regulieren.

12. Verfahren nach Anspruch 8-11, **gekennzeichnet durch** individuelles Steuern jedes DC/DC-Wandlers (214, 224), um die Leistung in seine entsprechende elektrische Speichereinheit (210, 220) von einer Ladevorrichtung während der Kalibrierung von mehreren elektrischen Speichereinheiten (210, 220) zu regulieren.

13. Verfahren nach Anspruch 8-12, **gekennzeichnet durch** Steuern des DC/DC-Wandlers (214, 224), wenn ein vorherbestimmter Ladezustand bestimmt wird.

14. Verfahren nach Anspruch 8-13, **gekennzeichnet durch** Verbinden des Hauptschützes (213, 223) und Entkoppeln des DC/DC-Wandlers (214, 224), wenn ein bestimmter Ladezustand einem vorherbestimmten Ladezustand entspricht, oder durch Steuern des Stroms zu dem DC/DC-Wandler (214, 224) durch ein Relais (215, 225), das mit dem DC/DC-Wandler (214, 224) in Reihe und mit dem Hauptschütz (213, 223) parallel geschaltet ist.

15. Computerprogramm, das Programmcodeeinrichtungen zum Durchführen der Schritte nach einem der Ansprüche 8-14 aufweist, wenn das Programm auf einem Computer läuft.

## Revendications

1. Système de stockage électrique pour un véhicule, comprenant au moins une unité de stockage électrique (210, 220) ayant un nombre prédéterminé d'éléments de batterie (211, 221), laquelle unité de stockage électrique (210, 220) peut être connectée à une liaison à courant continu (203) par un contacteur principal (213, 223), laquelle liaison à courant continu (203) est agencée pour fournir du courant au système de stockage électrique ou décharger du courant de celui-ci, où l'unité de stockage électrique (210, 220) peut être connectée à la liaison à courant continu (203) par un convertisseur continu/continu (214, 224), **caractérisé en ce que** le convertisseur continu/continu (214, 224) est connecté dans un circuit (216) parallèle au contacteur principal (213, 223), et où le contacteur principal (213, 223) et le convertisseur continu/continu (214, 224) sont agencés pour être actionnés en alternance pour connecter le système de stockage électrique à la liaison à courant continu (203).

2. Système de stockage électrique selon la revendication 1, **caractérisé en ce que** chaque unité de stockage électrique (210, 220) peut être connectée à la liaison à courant continu (203) par le convertisseur continu/continu (214, 224) connecté en parallèle à son contacteur principal (213, 223).

3. Système de stockage électrique selon l'une quelconque des revendications 1 et 2, **caractérisé en ce que** le convertisseur continu/continu (214, 224) est agencé pour être connecté à la liaison à courant continu (203) pendant au moins une partie d'un cycle de charge de l'unité de stockage électrique (210, 220), de préférence de sorte que le convertisseur continu/continu (214, 224) soit agencé pour être connecté à la liaison à courant continu (203) lorsqu'un état de charge prédéterminé est déterminé pour l'unité de stockage électrique (210, 220), ou par exemple de sorte que le convertisseur continu/continu (214, 224) soit agencé pour commander le courant de charge vers l'unité de stockage électrique (210, 220).

4. Système de stockage électrique selon la revendication 3, **caractérisé en ce que** le convertisseur continu/continu (214, 224) est agencé pour être déconnecté de la liaison à courant continu (203) lorsqu'un état de charge prédéterminé est déterminé pour l'unité de stockage électrique (210, 220).

5. Système de stockage électrique selon l'une quelconque des revendications 1 à 4, **caractérisé en ce que** le convertisseur continu/continu (214, 224) est agencé en tant que circuit de précharge entre l'unité de stockage électrique (210, 220) et la liaison à courant continu (203).

6. Système de stockage électrique selon l'une quelconque des revendications 1 à 5, **caractérisé en ce que** dans un système comprenant plusieurs unités de stockage électrique (210, 220), les convertisseurs continu/continu (214, 224) sont agencés pour égaliser la tension entre les unités de stockage électrique (210, 220), ou **en ce que** le circuit parallèle comprend un relais (215, 225) connecté en série au convertisseur continu/continu (214, 224).

7. Véhicule comprenant un système de stockage électrique selon l'une quelconque des revendications 1 à 6.

8. Procédé de commande d'un système de stockage électrique pour un véhicule, le système comprenant au moins une unité de stockage électrique (210, 220) ayant un nombre prédéterminé d'éléments de batterie, laquelle unité de stockage électrique (210, 220) peut être connectée à une liaison à courant continu (203) par un contacteur principal (213, 223), laquelle liaison à courant continu (203) est agencée pour fournir du courant au système de stockage électrique ou décharger du courant de celui-ci, **caractérisé par** les étapes qui consistent :
- à détecter un état actuel de l'au moins une unité de stockage électrique (210, 220) ;
- à comparer l'état actuel à un état souhaité d'au moins une unité de stockage électrique (210, 220) ;
- à acheminer du courant jusqu'à un convertisseur continu/continu (214, 224) connecté en parallèle au contacteur principal (213, 223) lorsque le contacteur principal (213, 223) est déconnecté ; et
- à commander le convertisseur continu/continu (214, 224) pour réguler la fourniture ou la décharge du courant et/ou de la tension en réponse à la comparaison.

9. Procédé selon la revendication 8, **caractérisé par** la commande du convertisseur continu/continu (214, 224) pour limiter le courant d'appel aux capacités de la liaison à courant continu (203), lorsqu'on souhaite connecter une unité de stockage électrique (210, 220) à la liaison à courant continu (203).

10. Procédé selon la revendication 8 ou 9, **caractérisé par** la commande du convertisseur continu/continu (214, 224) pour augmenter ou diminuer la tension d'entrée provenant d'un chargeur en réponse à un état de charge déterminé.

11. Procédé selon l'une quelconque des revendications 8 à 10, **caractérisé par** la commande individuelle de chaque convertisseur continu/continu (214, 224) pendant la connexion pour égaliser la tension entre les unités de stockage électrique (210, 220) lorsque des tensions différentes sont détectées dans les unités de stockage électrique (210, 220), ou par la commande du convertisseur continu/continu (214, 224) pour réguler la puissance dans une unité de stockage électrique (210, 220) provenant d'un chargeur pendant l'étalonnage de l'unité de stockage électrique (210, 220).

12. Procédé selon les revendications 8 à 11, **caractérisé par** la commande individuelle de chaque convertisseur continu/continu (214, 224) pour réguler la puissance dans son unité de stockage électrique correspondante (210, 220) provenant d'un chargeur pendant l'étalonnage de plusieurs unités de stockage électrique (210, 220).

13. Procédé selon les revendications 8 à 12, **caractérisé par** la commande du convertisseur continu/continu (214, 224) lorsqu'un état de charge prédéterminé est déterminé.

14. Procédé selon les revendications 8 à 13, **caractérisé par** la connexion du contacteur principal (213, 223) et la déconnexion du convertisseur continu/continu (214, 224) lorsqu'un état de charge déterminé est égal à un état de charge prédéterminé, ou par la commande du courant vers le convertisseur continu/continu (214, 224) par un relais (215, 225) connecté en série au convertisseur continu/continu (214, 224) et en parallèle au contacteur principal (213, 223).

15. Programme informatique comprenant un moyen de code de programme pour effectuer les étapes de l'une des revendications 8 à 14 lorsque ledit programme est exécuté sur un ordinateur.
